# EUROPEAN PATENT SPECIFICATION

(11) **EP 2 529 296 B1**
(45) Date of publication and mention of the grant of the patent: **05.03.2025**
(21) Application number: 11736705.2
(22) Date of filing: 20.01.2011
(51) Int. Cl.: G06F 21/60, G06F 11/14, H04L 9/40, G06F 21/55, G06F 16/11

(54) **DATA MANAGEMENT UTILIZING ACCESS AND CONTENT INFORMATION**
DATENVERWALTUNG MIT ZUGANGS- UND INHALTSINFORMATIONEN
GESTION DE DONNÉES UTILISANT DES INFORMATIONS D'ACCÈS ET DE CONTENU

(30) Priority: 03.05.2010 US 772450; 27.01.2010 WO PCT/IL2010/000069
(43) Date of publication of application: 05.12.2012
(73) Proprietor: Varonis Systems Inc., New York, New York 11018 (US)
(72) Inventor: FAITELSON, Yakov, New York, NY 10001 (US); KORKUS, Ohad, New York, NJ 10001 (US); KRETZER-KATZIR, Ophir, 71799 Reut (IL); BASS, David, 99797 Carmei Yoseph (IL)
(74) Representative: Evens, Paul Jonathan
(86) International application number: PCT/IL2011/000066
(87) International publication number: WO 2011/092685

(56) References cited:
- US-A1- 2005 065 823
- US-A1- 2007 033 340
- US-A1- 2007 156 897
- US-A1- 2007 198 608
- US-A1- 2007 276 823

## Description

### REFERENCE TO RELATED APPLICATIONS

Reference is made to U.S. Patent Application Serial No. 12/673,691, filed February 16, 2010, and entitled "ENTERPRISE LEVEL DATA MANAGEMENT", which is a National Phase Application of PCT\IL2010\000069 filed January 27, 2010 and entitled "ENTERPRISE LEVEL DATA MANAGEMENT".

Reference is also made to U.S. Patent Application Serial No. 12/772,450, filed May 03, 2010, and entitled "DATA MANAGEMENT UTILIZING ACCESS AND CONTENT INFORMATION".

Reference is also made to the following patents and patent applications, owned by assignee:
U.S. Patent Nos. 7,555,482 and 7,606,801;
U.S. Published Patent Application Nos. 2007/0244899, 2008/0271157, 2009/0100058, 2009/0119298 and 2009/0265780; and
U.S. Provisional Patent Application No. 61/240,726.

### FIELD OF THE INVENTION

The present invention relates to data management generally and more particularly enterprise level data management.

### BACKGROUND OF THE INVENTION

The following patent publications are believed to represent the current state of the art:
U.S. Patent Nos.: 5,465,387; 5,899,991; 6,338,082; 6,393,468; 6,928,439; 7,031,984; 7,068,592; 7,403,925; 7,421,740; 7,555,482 and 7,606,801; and
U.S. Published Patent Application Nos.: 2003/0051026; 2004/0249847; 2005/0108206; 2005/0203881; 2005/0120054; 2005/0086529; 2006/0064313; 2006/0184530; 2006/0184459 and 2007/0203872.
US 2007/156897 A1 discloses a control policy enforcer for an information management system. The control policy enforcer is operative to control access to operations by implementing various policies that regulate access to data elements within an enterprise.
US 2007/198608 A1 discloses a system for data classification to facilitate and improve data management within an enterprise data management wherein operations are evaluated based on data characteristics rather than data location, among other things.
US 2007/033340 A1 discloses a hierarchical storage management, HSM, system, comprising a data usage monitor for extracting data object information from data objects in a hierarchical storage complex that is managed by a content management system; a data relationship repository for storing data object information, wherein the data object information includes relationship data for data objects in the hierarchical storage complex; a content analysis processor that analyzes content attributes and metadata for data objects and generates content information that is stored with the data object information in the data relationship repository and a system that analyses the relationship data and makes data management action recommendations for the hierarchical storage complex.

### SUMMARY OF THE INVENTION

The invention is defined by the appended claims. The description that follows is subjected to this limitation. Any disclosure lying outside the scope of said claims is only intended for illustrative as well as comparative purposes.

The present invention provides improved systems and methodologies for data management.

There is thus provided in accordance with a preferred embodiment of the present invention a system for operating an enterprise computer network including multiple disparate clients, data elements and computer resources, the system including monitoring and collection functionality for providing continuously updated metadata relating to at least one of actual access, access permissions and content of the data elements and operating functionality utilizing the continuously updated metadata provided by the monitoring and collection functionality for functions other than reporting the at least one of actual access, access permissions and content or recommending changes in the access permissions.

Preferably, the functions other than actual access reporting include archiving. Additionally or alternatively the functions other than actual access reporting include encrypting.

In accordance with a preferred embodiment of the present invention, the system resides on a computer server which is connected to an enterprise level network to which is connected a multiplicity of computers and storage devices. Additionally, the computer resources include hardware resources and software resources.

There is also provided in accordance with another preferred embodiment of the present invention a system for operating an enterprise computer network including multiple disparate clients, data elements and computer resources, the system including monitoring and collection functionality for providing continuously updated metadata relating to actual access, access permissions and content of the data elements, and operating functionality utilizing the continuously updated metadata provided by the monitoring and collection functionality for recommending archiving of the data elements.

Preferably, the system also includes a backup storage facility connected to the enterprise computer network. Preferably, the system also includes a remote storage facility connected to the enterprise computer network. Preferably, the system also includes a secure storage facility connected to the enterprise computer network. Preferably, the computer resources include hardware resources and software resources.

In accordance with a preferred embodiment of the present invention, every day the system copies any of the data elements actually accessed by any user on that day to the backup storage facility. Additionally or alternatively, the system copies any of the data elements whose content indicates that they are confidential, are owned by a sensitive unit in the enterprise or are accessible by authorized individuals in the enterprise to the backup storage facility on a daily basis. Additionally or alternatively, the system copies any of the data elements marked with recommendations for changes in access permissions thereto to the backup storage facility on a daily basis.

Preferably, the system migrates to the remote storage facility any of the data elements that have recommendations for changes in access permissions thereto. Additionally or alternatively, the system migrates to the remote storage facility any of the data elements that have not been accessed for a first predetermined time period. Alternatively, the system migrates to the remote storage facility any of the data elements that have not been accessed for a first predetermined time period and that contain content indicating that they are confidential, are owned by a sensitive unit in the enterprise or are accessible by authorized individuals in the enterprise.

In accordance with a preferred embodiment of the present invention, the system migrates to the remote storage facility any of the data elements that have not been migrated to the remote storage facility for a second predetermined time period. Alternatively, the system migrates to the remote storage facility any of the data elements that have not been migrated to the remote storage facility for a second predetermined time period and that contain content indicating that they are confidential, are owned by a sensitive unit in the enterprise or are accessible by authorized individuals in the enterprise.

Preferably, the system migrates to the secure storage facility any of the data elements that contain personal identity information or sensitive information. Additionally or alternatively, when a user initiates a migration of data elements to a new storage device, the system recommends that all data elements actually accessed by any specified user or group of users, be migrated to the new storage device.

In accordance with a preferred embodiment of the present invention, at various times the system recommends that all data elements actually accessed by any specified user or group of users, be replicated to the backup storage facility. Additionally or alternatively, the system replicates to the backup storage facility any of the data elements whose content indicates that they are relevant to predetermined subjects.

Preferably, the system resides on a computer server which is connected to an enterprise level network to which is connected a multiplicity of computers and storage devices. Additionally or alternatively, an associated archiving system resides on a server other than the computer server.

There is further provided in accordance with yet another preferred embodiment of the present invention a system for operating an enterprise computer network including multiple disparate clients, data elements and computer resources, the system including monitoring and collection functionality for providing continuously updated metadata relating to actual access, access permissions and content of the data elements, and operating functionality utilizing the continuously updated metadata provided by the monitoring and collection functionality for recommending encrypting the data elements.

Preferably, for each individual data element of the data elements, at predetermined time intervals the system compiles a list of users having access permissions to each individual data element, compares the list of users to a predetermined list of authorized users, each of the authorized users being authorized to access confidential enterprise information, labels each individual data element that may be accessed by any of the authorized users as a confidential data element and encrypts the confidential data elements.

Additionally or alternatively, for each individual data element of the data elements, at predetermined time intervals the system compiles a list of users actually having accessed each individual data element, compares the list of users to a predetermined list of authorized users, each of the authorized users being authorized to access confidential enterprise information, labels each individual data element that has been accessed by any of the authorized users as a confidential data element and encrypts the confidential data elements.

Additionally or alternatively, for each individual data element of the data elements, at predetermined time intervals the system searches each individual data element for the appearance of any of a predetermined list of confidential information related terms, labels each individual data element that contains any of the predetermined list of confidential information related terms as a confidential data element and encrypts the confidential data elements.

Preferably, the computer resources include hardware resources and software resources. Additionally, the system resides on a computer server which is connected to an enterprise level network to which is connected a multiplicity of computers and storage devices. Additionally or alternatively, an associated encryption system resides on a server other than the computer server.

There is yet further provided in accordance with still another preferred embodiment of the present invention a method for operating an enterprise computer network including multiple disparate clients, data elements and computer resources, the method including monitoring and collecting continuously updated metadata relating to at least one of actual access, access permissions and content of the data elements and utilizing the continuously updated metadata for functions other than reporting the at least one of actual access, access permissions and content or recommending changes in the access permissions.

Preferably, the functions other than actual access reporting include archiving. Additionally or alternatively, the functions other than actual access reporting include encrypting. Preferably, the computer resources include hardware resources and software resources.

There is also provided in accordance with another preferred embodiment of the present invention a method for operating an enterprise computer network including multiple disparate clients, data elements and computer resources, the method including monitoring and collecting continuously updated metadata relating to actual access, access permissions and content of the data elements, and utilizing the continuously updated metadata for recommending archiving of the data elements.

Preferably, the method also includes providing a backup storage facility connected to the enterprise computer network. Preferably, the method also includes providing a remote storage facility connected to the enterprise computer network. Preferably, the method also includes providing a secure storage facility connected to the enterprise computer network. Preferably, the computer resources include hardware resources and software resources.

In accordance with a preferred embodiment of the present invention, every day any of the data elements actually accessed by any user on that day are copied to the backup storage facility. Additionally or alternatively, any of the data elements whose content indicates that they are confidential, are owned by a sensitive unit in the enterprise or are accessible by authorized individuals in the enterprise are copied to the backup storage facility on a daily basis. Additionally or alternatively, any of the data elements marked with recommendations for changes in access permissions thereto are copied to the backup storage facility on a daily basis.

Preferably, any of the data elements that have recommendations for changes in access permissions thereto are migrated to the remote storage facility. Additionally or alternatively, any of the data elements that have not been accessed for a first predetermined time period are migrated to the remote storage facility. Alternatively, any of the data elements that have not been accessed for a first predetermined time period and that contain content indicating that they are confidential, are owned by a sensitive unit in the enterprise or are accessible by authorized individuals in the enterprise are migrated to the remote storage facility.

In accordance with a preferred embodiment of the present invention, any of the data elements that have not been migrated to the remote storage facility for a second predetermined time period are migrated to the remote storage facility. Alternatively, any of the data elements that have not been migrated to the remote storage facility for a second predetermined time period and that contain content indicating that they are confidential, are owned by a sensitive unit in the enterprise or are accessible by authorized individuals in the enterprise are migrated to the remote storage facility.

Preferably, any of the data elements that contain personal identity information or sensitive information are migrated to the secure storage facility. Additionally or alternatively, when a user initiates a migration of data elements to a new storage device, all data elements actually accessed by any specified user or group of users are recommended to be migrated to the new storage device.

In accordance with a preferred embodiment of the present invention, at various times all data elements actually accessed by any specified user or group of users are recommended to be replicated to the backup storage facility. Additionally or alternatively, any of the data elements whose content indicates that they are relevant to predetermined subjects are replicated to the backup storage facility.

There is further provided in accordance with yet another preferred embodiment of the present invention a method for operating an enterprise computer network including multiple disparate clients, data elements and computer resources, the method including monitoring and collecting continuously updated metadata relating to actual access, access permissions and content of the data elements and utilizing the continuously updated metadata for recommending encrypting the data elements.

Preferably, for each individual data element of the data elements, at predetermined time intervals a list of users having access permissions to each individual data element is compiled, the list of users is compared to a predetermined list of authorized users, each of the authorized users being authorized to access confidential enterprise information, each individual data element that may be accessed by any of the authorized users is labeled as a confidential data element and the confidential data elements are encrypted.

Additionally or alternatively, for each individual data element of the data elements, at predetermined time intervals a list of users actually having accessed each individual data element is compiled, the list of users is compared to a predetermined list of authorized users, each of the authorized users being authorized to access confidential enterprise information, each individual data element that has been accessed by any of the authorized users is labeled as a confidential data element and the confidential data elements are encrypted.

Additionally or alternatively, for each individual data element of the data elements, at predetermined time intervals each individual data element is searched for the appearance of any of a predetermined list of confidential information related terms, each individual data element that contains any of the predetermined list of confidential information related terms is labeled as a confidential data element and the confidential data elements are encrypted.

Preferably, the computer resources include hardware resources and software resources.

### BRIEF DESCRIPTION OF THE DRAWINGS

The present invention will be understood and appreciated more fully from the following detailed description, taken in conjunction with the drawings in which:
Fig. 1 is a simplified diagram illustrating operation of a rule-based system for management of data elements, constructed and operative in accordance with a preferred embodiment of the present invention;
Fig. 2 is a simplified pictorial illustration of the operation of an archiving management system constructed and operative in accordance with a preferred embodiment of the present invention;
Figs. 3 and 4 are simplified flowcharts indicating steps in the operation of the archiving management system of Fig. 2;
Fig. 5 is a simplified pictorial illustration of the operation of an encryption management system constructed and operative in accordance with another preferred embodiment of the present invention; and
Figs. 6, 7 and 8 are simplified flowcharts indicating steps in the operation of the encryption management system of Fig. 5.

### DETAILED DESCRIPTION OF PREFERRED EMBODIMENTS

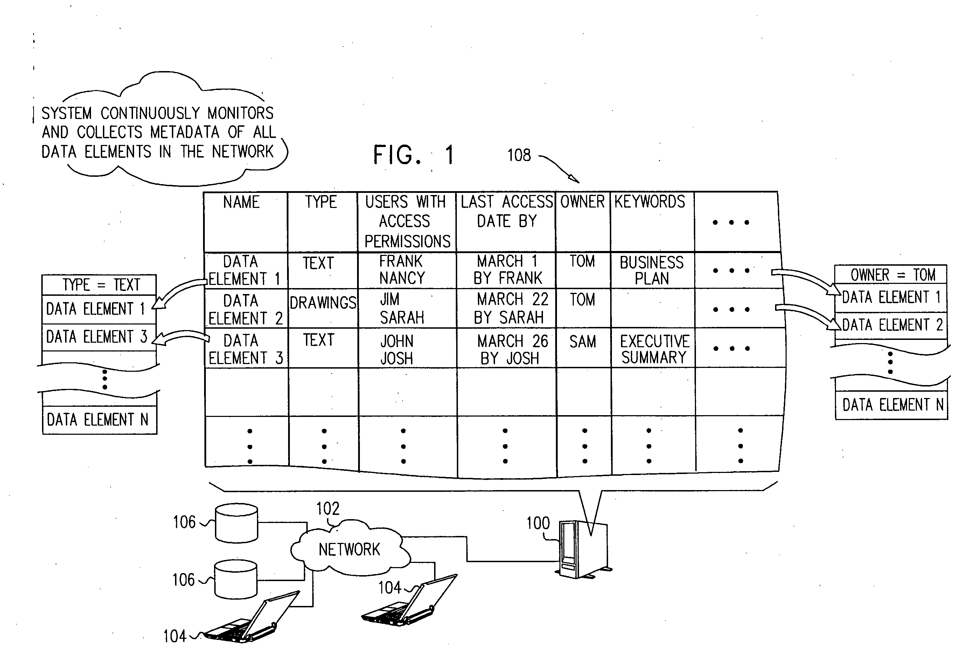

Reference is now made to Fig. 1, which is a simplified diagram illustrating aspects of operation of a rule-based system for management of data elements, constructed and operative in accordance with a preferred embodiment of the present invention.

This system preferably is suitable for operating in an enterprise computer network including multiple disparate clients, data elements, computer hardware resources and computer software resources, and includes:
monitoring and collection functionality for providing continuously updated metadata relating to at least one of actual access, access permissions and content of the data elements; and
operating functionality utilizing the continuously updated metadata provided by the monitoring and collection functionality for functions other than reporting at least one of actual access, access permissions and content or recommending changes in the access permissions.

As seen in Fig. 1, the system may reside on a server 100, connected to an enterprise level network 102 to which may be connected hundreds or thousands of computers 104 and storage devices 106. A matrix 108 is defined at any given time including all of the data elements in the enterprise at that time. Various characteristics of the data elements and metadata of the data elements are applied to the matrix and define subsets of the data elements meeting various criteria. A data element normally belongs to multiple subsets.

The term "metadata" for the purposes of this application is defined to include, inter alia, anything characterizing a data element other than the content thereof. Examples of metadata include size, type, creation date, keywords, last access date and access permissions.

The various data elements in the matrix are sorted according to the subsets to which they belong and various rules are applied to data elements which fall within various combinations of subsets. The results of application of these rules are higher level subsets, with each of which is associated a data element management recommendation.

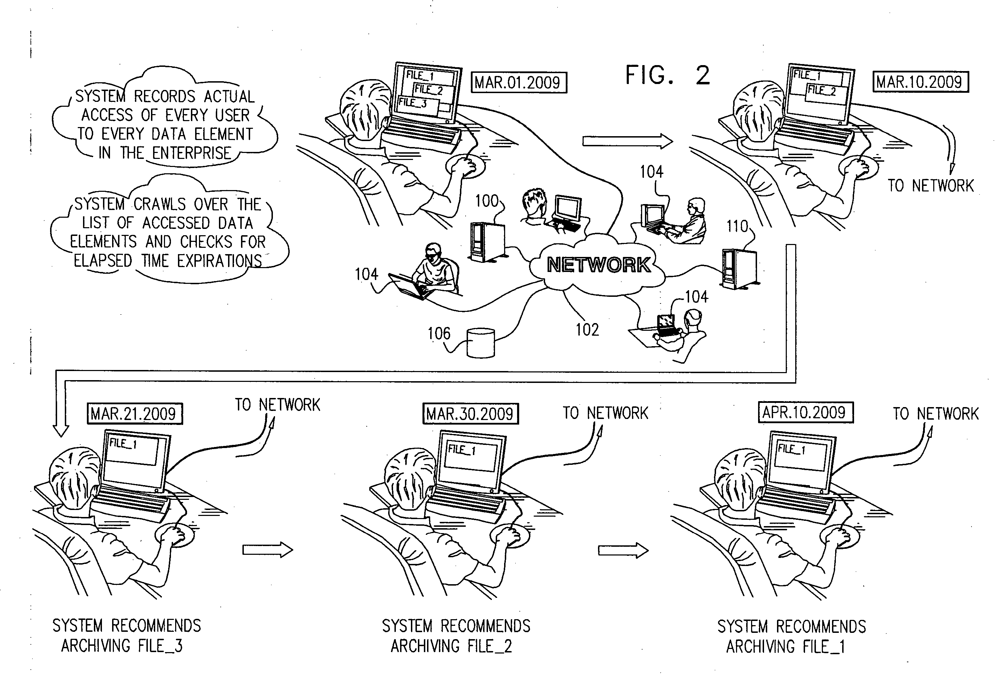

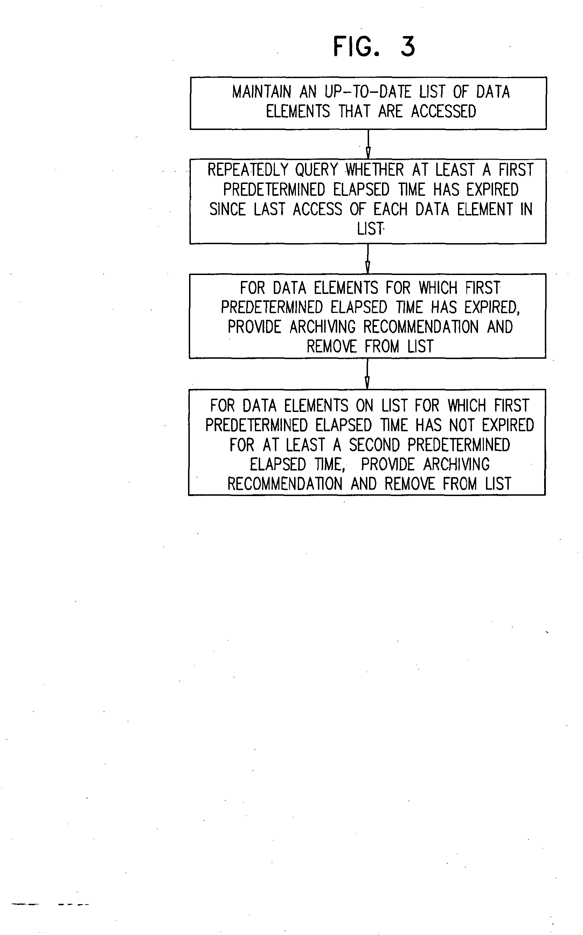

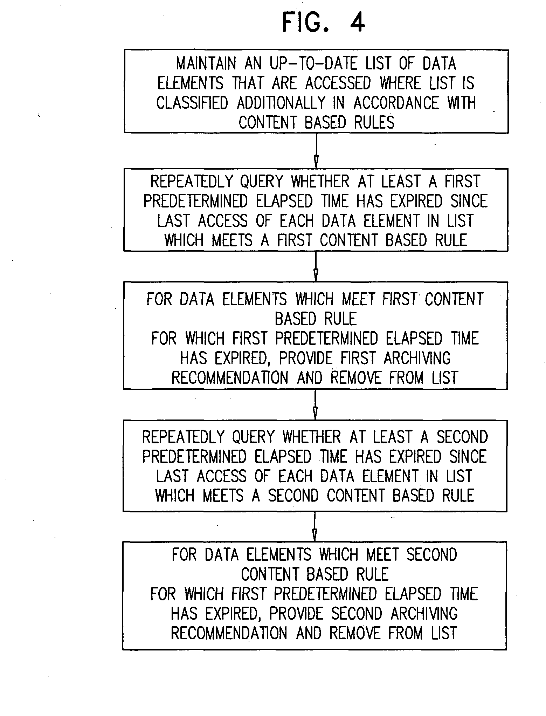

Reference is now made to Fig. 2, which is a simplified pictorial illustration of the operation of an archiving management system, constructed and operative in accordance with an embodiment of the present invention, and to Figs. 3 & 4, which are simplified flowcharts indicating steps in the operation of the archiving management system. The archiving management system constitutes one example of a system for operating an enterprise computer network including multiple disparate clients, data elements, computer hardware resources and computer software resources in accordance with a preferred embodiment of the present invention. Such a system generally includes:
actual access reporting functionality operative to indicate which clients actually accessed which data elements within a given time period;
access permission reporting functionality operative to provide a list of data elements that may be accessed by a predefined group of users;
actual access report responsive operating functionality operative in response to actual access reporting received from the actual access reporting functionality to provide operative recommendations for archiving functionality, based on the actual access reporting; and
access permission report responsive operating functionality operative in response to access permission reporting received from the access permission reporting functionality to provide operative recommendations for archiving functionality, based on the access permission reporting.

As noted hereinabove with reference to Fig. 1, it is appreciated that the system may reside on a server 100, connected to an enterprise level network 102 to which may be connected hundreds or thousands of computers 104 and storage devices 106. As illustrated in Fig. 1, the server preferably records actual access of every user to every data element, such as a file, in the enterprise, in matrix 108.

As seen in Fig. 2, the system recommends that all data elements actually accessed by any user during a given day, such as March 1, 2009, be copied to a backup storage facility. An associated archiving system, which may be resident on another server 110, may carry out the archiving recommendation.

Additionally or alternatively, the system preferably iterates through a list of data elements and checks the content, metadata, location, owner, and access permissions thereof. Any data element containing content indicating, for example, that the data element is confidential, is owned by a sensitive unit in the enterprise or is accessible by certain individuals in the enterprise, is recommended to be copied to the backup storage facility on a daily basis.

Additionally or alternatively, the system preferably iterates through a list of data elements and checks for recommendations for changes in access permissions thereto. For example, all data elements having recommendations for changes in access permissions thereto are also recommended to be copied to the backup storage facility on a daily basis.

Preferably, the system iterates through a list of data elements and checks whether a first predetermined time period has elapsed since the last actual access to each of the data elements. It is appreciated that the first predetermined time period may be a fixed time or alternatively a time which varies based on other parameters.

As seen in Figs. 2 & 3, at the expiration of the first predetermined time period, such as on March 21, 2009, the system recommends that all data elements not actually accessed, or accessed less than a predetermined number of times, during the predetermined period, such as twenty days, be migrated to a remote storage facility.

As also seen in Figs. 2 & 3, at the expiration of a second predetermined time period, such as on April 10, 2009, the system recommends that all data elements that have not been migrated to the remote storage facility within the second predetermined period, be migrated to the remote storage facility.

Alternatively, as seen in Fig. 4, at the expiration of the first predetermined time period, such as on March 21, 2009, the system recommends that all data elements not actually accessed, or accessed less than a predetermined number of times, during the predetermined period, such as twenty days, and that match a predetermined set of content-based rules, be migrated to the remote storage facility.

As also seen in Fig. 4, at the expiration of a second predetermined time period, such as on April 10, 2009, the system recommends that all data elements that have not been migrated to the remote storage facility within the second predetermined period and that match a predetermined set of content-based rules, be migrated to the remote storage facility.

Additionally or alternatively, any data element containing content indicating that the data element contains personal identity information or sensitive information is also recommended to be migrated to a secure storage facility.

Additionally or alternatively, all data elements having recommendations for changes in access permissions thereto are also recommended to be migrated to the remote storage facility.

At various times a user may initiate a migration of data elements to a new storage device. In such a case, the system may also recommend that all data elements actually accessed by any specified user or group of users, be migrated to the new storage device.

Additionally or alternatively, any data element containing content indicating that the data element is relevant to subjects defined by the user are also recommended to be copied to the new storage device.

Additionally or alternatively, at various times the system may recommend that all data elements actually accessed by any specified user or group of users, be replicated on the backup storage facility.

Additionally or alternatively, all data elements whose content indicates that they are relevant to predetermined subjects are also recommended to be replicated on the backup storage facility.

The associated archiving system, which may be resident on another server 110, may carry out the archiving recommendations.

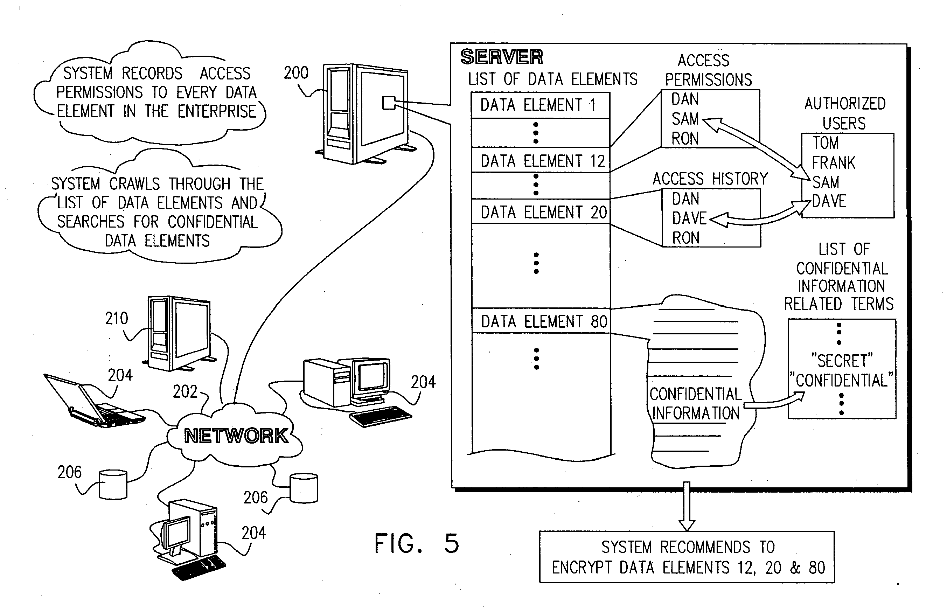

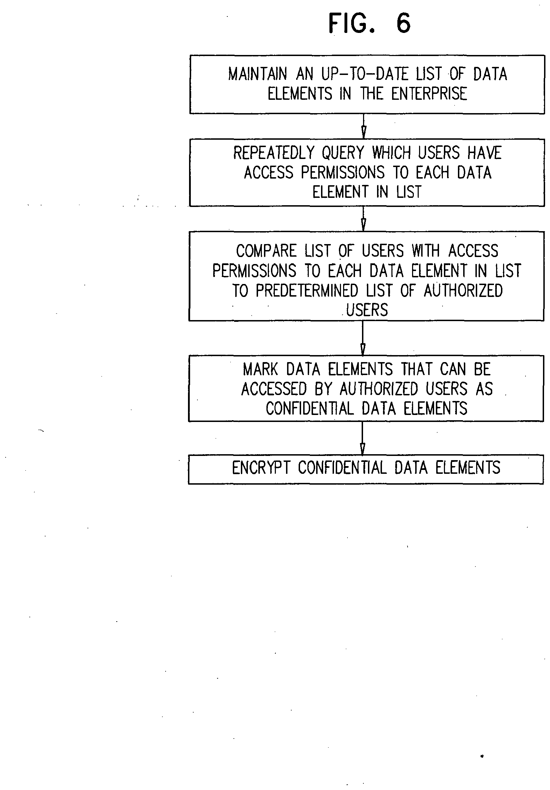

Reference is now made to Fig. 5, which is a simplified pictorial illustration of the operation of an encryption management system, constructed and operative in accordance with another embodiment of the present invention, and to Figs. 6, 7 and 8, which are simplified flowcharts indicating steps of the operation of the encryption management system. The encryption management system constitutes another example of a system for operating an enterprise computer network including multiple disparate clients, data elements, computer hardware resources and computer software resources in accordance with another embodiment of the present invention. Such a system generally includes:
access permission reporting functionality operative to provide a list of data elements that may be accessed by a predefined group of users;
actual access reporting functionality operative to indicate which clients actually accessed which data elements within a given time period;
access permission report responsive operating functionality operative in response to access permission reporting received from the access permission reporting functionality to provide operative recommendations for encryption functionality, based on the access permission reporting; and
actual access report responsive operating functionality operative in response to actual access reporting received from the actual access reporting functionality to provide operative recommendations for encryption functionality, based on the actual access reporting.

Turning now to Fig. 5, it is appreciated that the system may reside on a server 200, connected to an enterprise level network 202 to which may be connected hundreds or thousands of computers 204 and storage devices 206. Similar to server 100 illustrated in Fig. 1, the server 200 preferably records access permissions to every data element, such as a file, in the enterprise.

As seen in Figs. 5 & 6, the system preferably iterates through the list of data elements at predetermined intervals. For each data element, the system retrieves a list of users who have access permissions to the data element and compares the list of users to a predetermined list of authorized users, each of which being authorized to access confidential enterprise information, thereby determining which of the data elements may be accessed by the authorized users. The system then compiles a list of confidential data elements that may be accessed by the authorized users.

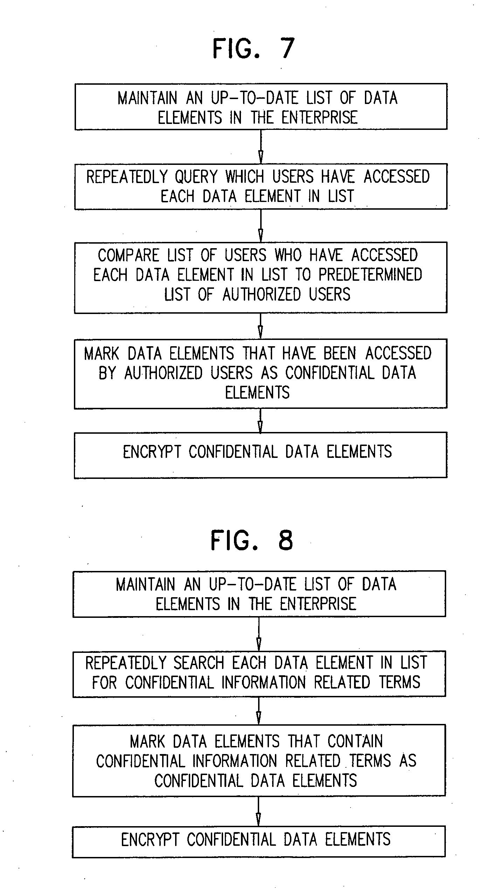

Additionally or alternatively, as seen in Figs. 5 & 7, the system preferably iterates through the list of data elements at predetermined intervals. For each data element, the system retrieves a list of users who have actually accessed each data element during the last predetermined interval and compares the list of users to the predetermined list of authorized users each of which being authorized to access confidential enterprise information, thereby determining which of the data elements have been accessed by the authorized users. The system then compiles a list of confidential data elements that have been accessed by the authorized users.

Additionally or alternatively, as seen in Figs. 5 & 8, the system preferably iterates through the list of data elements at predetermined intervals, and searches each data element for the appearance of confidential information related terms, such as "confidential". The system then compiles a list of confidential data elements containing the confidential information related terms.

In the illustrated example, the system recommends that all the confidential data elements be encrypted. An associated encryption system which may be resident on another server 210, may carry out the encryption recommendation.

## Claims

1. A system (100)(200) for operating an enterprise computer network (102)(202) including multiple disparate clients, data elements and computer resources, said system (100)(200) comprising:
a remote storage facility connected to said enterprise computer network;
monitoring and collection functionality for providing continuously updated metadata relating to at least one of executed actual access, access permissions and content of said data elements;
operating functionality utilizing said continuously updated metadata provided by said monitoring and collection functionality for functions other than reporting said at least one of executed actual access, access permissions and content or recommending changes in said access permissions, wherein the operating functionality is operative to utilize said continuously updated metadata provided by said monitoring and collection functionality for recommending archiving of said data elements, said recommending archiving of said data elements including recommending that all data elements not actually accessed, or accessed less than a predetermined number of times, during a first predetermined time period be migrated to said remote storage facility; and
an associated archiving system operative to carry out said archiving recommendations.

2. A system (100) according to claim 1 and wherein said system (100) further comprises a backup storage facility connected to said enterprise computer network.

3. A system according to claim 2 and wherein said recommending archiving of said data elements further includes recommending that all data elements actually accessed by any user during a given day be copied to said backup storage facility.

4. A system according to claim 2 and wherein said recommending archiving of said data elements further includes recommending that any data element containing content indicating that the data element is confidential, is owned by a sensitive unit in the enterprise or is accessible by certain individuals in the enterprise, be copied to said backup storage facility on a daily basis.

5. A system according to claim 2 and wherein said recommending archiving of said data elements further includes recommending that all data elements having recommendations for changes in access permissions thereto be copied to the backup storage facility on a daily basis.

6. A system according to claim 2 and wherein said recommending archiving of said data elements further includes recommending that all data elements that have not been migrated to the remote storage facility within a second predetermined time period, be migrated to said remote storage facility.

7. A system according to claim 2 and wherein said recommending archiving of said data elements further includes recommending that all data elements having recommendations for changes in access permissions thereto be migrated to said remote storage facility.

8. A system according to claim 2 and wherein said recommending archiving of said data elements further includes recommending that all data elements actually accessed by any specified user or group of users, be replicated on said backup storage facility.

9. A system according to claim 2 and wherein said recommending archiving of said data elements further includes recommending that all data elements whose content indicates that they are relevant to predetermined subjects be replicated on said backup storage facility.

10. A system (200) according to any of the preceding claims and wherein the operating functionality is operative to utilize said continuously updated metadata provided by said monitoring and collection functionality for recommending encrypting said data elements.

## Patentansprüche

1. System (100)(200) zum Betreiben eines Unternehmenscomputernetzwerks (102)(202), das mehrere unterschiedliche Clients, Datenelemente und Computerressourcen beinhaltet, wobei das System (100)(200) Folgendes umfasst:
eine Remote-Speichereinrichtung, die mit dem Unternehmenscomputernetzwerk verbunden ist;
Überwachungs- und Sammlungsfunktionalität zum Bereitstellen von kontinuierlich aktualisierten Metadaten bezüglich zumindest einem von ausgeführtem tatsächlichen Zugang, Zugangsberechtigungen und Inhalt der Datenelemente;
Betriebsfunktionalität, welche die kontinuierlich aktualisierten Metadaten, die durch die Überwachungs- und Sammlungsfunktionalität bereitgestellt werden, für andere Funktionen als Melden des zumindest einem von ausgeführtem tatsächlichen Zugang, Zugangsberechtigungen und Inhalt oder Empfehlen von Änderungen der Zugangsberechtigungen nutzt, wobei die Betriebsfunktionalität bedienbar ist, um die kontinuierlich aktualisierten Metadaten, die durch die Überwachungs- und Erfassungsfunktionalität bereitgestellt werden, zum Empfehlen zum Archivieren der Datenelemente zu nutzen, wobei das Empfehlen zum Archivieren der Datenelemente Empfehlen beinhaltet, dass alle Datenelemente, auf die während eines ersten vorbestimmten Zeitraums nicht tatsächlich zugegangen wird oder weniger als eine vorbestimmte Anzahl an Malen zugegangen wird, in die Remote-Speichereinrichtung migriert werden, und
ein assoziiertes Archivierungssystem, das bedienbar ist, um die Archivierungsempfehlungen durchzuführen.

2. System (100) nach Anspruch 1 und wobei das System (100) ferner eine Sicherungsspeichereinrichtung umfasst, die mit dem Unternehmenscomputernetzwerk verbunden ist.

3. System nach Anspruch 2 und wobei das Empfehlen zum Archivieren der Datenelemente ferner Empfehlen beinhaltet, dass alle Datenelemente, auf die tatsächlich durch einen beliebigen Benutzer während eines gegebenen Tages zugegangen wird, in die Sicherungsspeichereinrichtung kopiert werden.

4. System nach Anspruch 2 und wobei das Empfehlen zum Archivieren der Datenelemente ferner Empfehlen beinhaltet, dass ein beliebiges Datenelement, das Inhalt enthält, der angibt, dass das Datenelement vertraulich ist, durch eine sensible Einheit in dem Unternehmen besitzt wird oder durch bestimmte Individuen in dem Unternehmen zugänglich ist, in die Sicherungsspeichereinrichtung auf einer täglichen Basis kopiert wird.

5. System nach Anspruch 2 und wobei das Empfehlen zum Archivieren der Datenelemente ferner Empfehlen beinhaltet, dass alle Datenelemente, die Empfehlungen für Änderungen der Zugangsberechtigungen dazu aufweisen, in die Sicherungsspeichereinrichtung auf einer täglichen Basis kopiert werden.

6. System nach Anspruch 2 und wobei das Empfehlen zum Archivieren der Datenelemente ferner Empfehlen beinhaltet, dass alle Datenelemente, die nicht innerhalb eines zweiten vorbestimmten Zeitraums zu der Remote-Speichereinrichtung migriert worden sind, zu der Remote-Speichereinrichtung migriert werden.

7. System nach Anspruch 2 und wobei das Empfehlen zum Archivieren der Datenelemente ferner Empfehlen beinhaltet, dass alle Datenelemente, die Empfehlungen für Änderungen der Zugangsberechtigungen dazu aufweisen, in die Remote-Speichereinrichtung migriert werden.

8. System nach Anspruch 2 und wobei das Empfehlen zum Archivieren der Datenelemente ferner Empfehlen beinhaltet, dass alle Datenelemente, auf die tatsächlich durch einen beliebigen spezifizierten Benutzer oder eine beliebige spezifizierte Gruppe von Benutzern zugegangen wird, in der Sicherungsspeichereinrichtung repliziert werden.

9. System nach Anspruch 2 und wobei das Empfehlen zum Archivieren der Datenelemente ferner Empfehlen beinhaltet, dass alle Datenelemente, deren Inhalt angibt, dass sie relevant für vorbestimmte Themen sind, in der Sicherungsspeichereinrichtung repliziert werden.

10. System (200) nach einem der vorhergehenden Ansprüche und wobei die Betriebsfunktionalität bedienbar ist, um die kontinuierlich aktualisierten Metadaten, die durch die Überwachungs- und Sammlungsfunktionalität bereitgestellt werden, zu nutzen, um Verschlüsseln der Datenelemente zu empfehlen.

## Revendications

1. Système (100)(200) permettant d'exploiter un réseau informatique d'entreprise (102)(202) comprenant de multiples clients, des éléments de données et des ressources informatiques disparates, ledit système (100)(200) comprenant :
une installation de stockage à distance connectée audit réseau informatique d'entreprise ;
une fonctionnalité de surveillance et de collecte destinée à fournir des métadonnées mises à jour en continu concernant au moins l'un des accès réels exécutés, des autorisations d'accès et du contenu desdits éléments de données ;
une fonctionnalité d'exploitation utilisant lesdites métadonnées mises à jour en continu fournies par ladite fonctionnalité de surveillance et de collecte pour des fonctions autres que le signalement dudit au moins un de l'accès réel exécuté, des autorisations d'accès et du contenu ou la recommandation de changements desdites autorisations d'accès, ladite fonctionnalité d'exploitation servant à utiliser lesdites métadonnées mises à jour en continu fournies par ladite fonctionnalité de surveillance et de collecte pour recommander l'archivage desdits éléments de données, ladite recommandation d'archivage desdits éléments de données comprenant la recommandation que tous les éléments de données qui n'ont pas effectivement été accédés, ou qui ont été accédés un nombre de fois qui est inférieur à un nombre de fois prédéfini, durant une première période de temps prédéfinie, soient migrés vers ladite installation de stockage à distance ; et
un système d'archivage associé servant à exécuter lesdites recommandations d'archivage.

2. Système (100) selon la revendication 1 et ledit système (100) comprenant en outre une installation de stockage de sauvegarde connectée audit réseau informatique d'entreprise.

3. Système selon la revendication 2 et ladite recommandation d'archivage desdits éléments de données comprenant en outre la recommandation que tous les éléments de données effectivement accédés par un quelconque utilisateur durant une journée donnée soient copiés dans ladite installation de stockage de sauvegarde.

4. Système selon la revendication 2 et ladite recommandation d'archivage desdits éléments de données comprenant en outre la recommandation que tout élément de données contenant un contenu indiquant que l'élément de données est confidentiel, appartient à une unité sensible dans l'entreprise ou est accessible par certaines personnes de l'entreprise, soit copié sur ladite installation de stockage de sauvegarde sur une base journalière.

5. Système selon la revendication 2 et ladite recommandation d'archivage desdits éléments de données comprenant en outre la recommandation que tous les éléments de données comportant des recommandations pour des changements d'autorisations d'accès à ceux-ci soient copiés dans l'installation de stockage de sauvegarde sur une base journalière.

6. Système selon la revendication 2 et ladite recommandation d'archivage desdits éléments de données comprenant en outre la recommandation que tous les éléments de données qui n'ont pas été migrés vers l'installation de stockage à distance dans une seconde période de temps prédéfinie, soient migrés vers ladite installation de stockage à distance.

7. Système selon la revendication 2 et ladite recommandation d'archivage desdits éléments de données comprenant en outre la recommandation que tous les éléments de données comportant des recommandations pour des changements d'autorisations d'accès à ceux-ci soient migrés vers ladite installation de stockage à distance.

8. Système selon la revendication 2 et ladite recommandation d'archivage desdits éléments de données comprenant en outre la recommandation que tous les éléments de données effectivement accédés par un quelconque utilisateur ou groupe d'utilisateurs spécifié, soient répliqués sur ladite installation de stockage de sauvegarde.

9. Système selon la revendication 2 et ladite recommandation d'archivage desdits éléments de données comprenant en outre la recommandation que tous les éléments de données dont le contenu indique qu'ils sont pertinents pour des sujets prédéfinis soient répliqués sur ladite installation de stockage de sauvegarde.

10. Système (200) selon l'une quelconque des revendications précédentes et ladite fonctionnalité d'exploitation servant à utiliser lesdites métadonnées mises à jour en continu fournies par ladite fonctionnalité de surveillance et de collecte pour recommander le chiffrement desdits éléments de données.
